# EUROPEAN PATENT APPLICATION

(11) **EP 4 503 189 A1**
(43) Date of publication of application: **05.02.2025**
(21) Application number: 23778803.9
(22) Date of filing: 27.01.2023
(51) Int. Cl.: H01M 4/505, C01G 45/06

(54) **POSITIVE ELECTRODE ACTIVE MATERIAL FOR NONAQUEOUS ELECTROLYTE SECONDARY BATTERIES**

(30) Priority: 31.03.2022 JP 2022058597
(71) Applicant: Panasonic Intellectual Property Management Co., Ltd., Kadoma-shi, Osaka 571-0057 (JP)
(72) Inventor: ESAKI, Shogo, Kadoma-shi, Osaka 571-0057 (JP); SAITO, Motoharu, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP); MATSUSHITA, Junko, Kadoma-shi, Osaka 571-0057 (JP)
(74) Representative: Novagraaf International SA
(86) International application number: PCT/JP2023/002641
(87) International publication number: WO 2023/188766

(57) **Abstract**

A positive electrode active material for nonaqueous electrolyte secondary batteries according to the present invention is a composite oxide which is represented by general formula LiₓTMₜₘM_{y}O_{2-f}F_{f} and has a crystal structure that belongs to the space group Fm-3m; and in the general formula, TM represents a transition metal, M represents a non-transition metal, and if Q = 2 × tm × (1 - (1 - f/2)⁵), Q ≥ 1 is satisfied. With respect to a dV/dq-SOC curve showing the relationship between the state of charge SOC and dV/dq of a half cell that contains this composite oxide, the dV/dq-SOC curve being obtained by charging the half cell with a charging current of 0.1 C at 25°C to an end voltage within the range of 4.7 V to 4.95 V, there is one or more peaks within the SOC range from 40% to 70%.

## Description

### TECHNICAL FIELD

The present disclosure relates to a technique of a positive electrode active material for a non-aqueous electrolyte secondary battery.

### BACKGROUND

As a secondary battery having a high output and a high energy density, a non-aqueous electrolyte secondary battery has been widely used, in which the non-aqueous electrolyte secondary battery includes a positive electrode, a negative electrode, and a non-aqueous electrolyte, and performs charging and discharging by moving lithium ions and the like between the positive electrode and the negative electrode.

For example, Patent Literature 1 discloses, as a positive electrode active material used in a non-aqueous electrolyte secondary battery, a composite oxide that has a crystal structure belonging to a space group Fm-3m, contains lithium and molybdenum, and is substantially free of chromium.

### CITATION LIST

### PATENT LITERATURE

Patent Literature 1: JP 2017-202954 A

### SUMMARY

An object of the present disclosure is to provide a positive electrode active material for a non-aqueous electrolyte secondary battery having a high discharge voltage.

A positive electrode active material for a non-aqueous electrolyte secondary battery according to an aspect of the present disclosure is a composite oxide that has a crystal structure belonging to a space group Fm-3m and is represented by a general formula: LiₓTMₜₘM_{y}C_{2-f}F_{f}, in the general formula, TM represents a transition metal, M represents a non-transition metal, and when Q = 2 × tm × {1 - (1 - f/2)⁵}, Q ≥ 1 is satisfied, and when the composite oxide is used for a half-cell manufactured by the following method, one or more peaks in an SOC range of greater than or equal to 40% and less than or equal to 70% appear in a dV/dq-SOC curve showing a relationship between a state of charge SOC of the half-cell and dV/dq, which is a ratio of a change amount dV of a voltage V of the half-cell to a change amount dq of a battery capacity q of the half-cell, the dV/dq-SOC curve being obtained by charging the half-cell with a charging current of 0.1 C at 25°C to an end voltage in a range of greater than or equal to 4.7 V and less than or equal to 4.95 V (Method: A slurry for a positive electrode mixture layer is prepared by mixing the composite oxide, acetylene black, and polyvinylidene fluoride at a mass ratio of 7:2:1, and the mixture is dispersed using N-methyl-2-pyrrolidone. The slurry for a positive electrode mixture layer is applied to an aluminum foil, dried, and then rolled so that a film thickness is in a range of greater than or equal to 20 µm and less than or equal to 50 µm. Thereafter, punching is performed into a size of 20 mm × 20 mm to obtain a positive electrode. An electrode assembly in which a separator is interposed between the positive electrode and a metal lithium foil (thickness: 0.3 mm) as a negative electrode is housed in an outer body of an aluminum laminate film, and a non-aqueous electrolyte in which LiPF₆ is dissolved in a mixed solvent of fluoroethylene carbonate and methyl propionate (volume ratio: 1:3) so that a concentration thereof is 1 mol/liter is injected into the outer body and sealed to form a half-cell.)

According to an aspect of the present disclosure, it is possible to provide a positive electrode active material for a non-aqueous electrolyte secondary battery having a high discharge voltage.

### BRIEF DESCRIPTION OF DRAWINGS

FIG. 1 is a cross-sectional view of a non-aqueous electrolyte secondary battery as an example of an embodiment.
FIG. 2 is a view showing an X-ray diffraction result of Example 1.
FIG. 3 is a view showing an X-ray diffraction result of Example 3.
FIG. 4 is a view showing an X-ray diffraction result of Example 6.
FIG. 5 is a view showing an X-ray diffraction result of Example 13.
FIG. 6 is a view showing an X-ray diffraction result of Example 14.
FIG. 7 is a view showing an X-ray diffraction result of Example 15.
FIG. 8 is a view showing an X-ray diffraction result of Example 17.
FIG. 9 is a view showing an X-ray diffraction result of Comparative Example 1.
FIG. 10 is a view showing an X-ray diffraction result of Comparative Example 2.
FIG. 11 is a view showing an X-ray diffraction result of Comparative Example 3.
FIG. 12 is a view showing an X-ray diffraction result of Comparative Example 4.
FIG. 13 illustrates dV/dq-SOC curves of half-cells of Examples 1 and 2 and Comparative Examples 1 and 2.
FIG. 14 illustrates dV/dq-SOC curves of half-cells of Examples 4, 5, 6, and 8.
FIG. 15 illustrates dV/dq-SOC curves of half-cells of Examples 10, 13, and 14.
FIG. 16 illustrates dV/dq-SOC curves of half-cells of Examples 15, 16, and 17.

### DESCRIPTION OF EMBODIMENTS

Hereinafter, an example of a non-aqueous electrolyte secondary battery using a positive electrode active material for a non-aqueous electrolyte secondary battery of the present disclosure will be described.

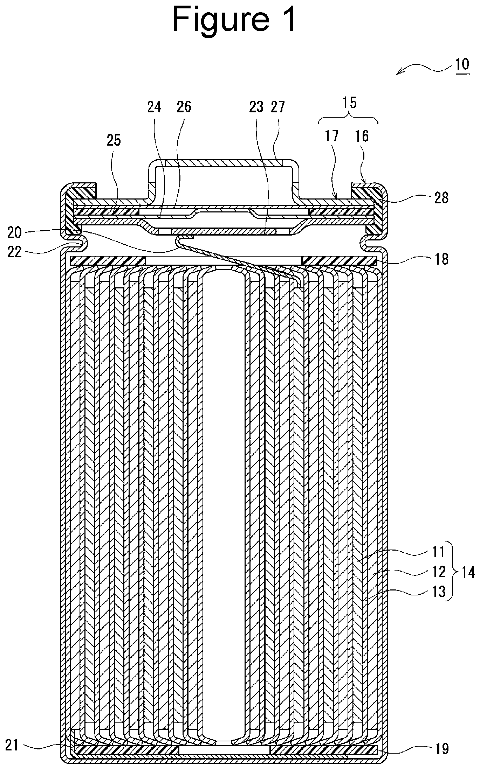

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 accommodating the above-mentioned members. The battery case 15 includes a case body 16 and a sealing assembly 17 for closing an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. In addition, examples of the battery case 15 include metal cases having a cylindrical shape, a square shape, a coin shape, a button shape, or the like, and resin cases (laminated batteries) formed by lamination with a resin sheet.

The non-aqueous electrolyte contains, for example, a non-aqueous solvent and an electrolyte salt dissolved in the non-aqueous solvent. Examples of the non-aqueous solvent include esters, ethers, nitriles, amides, and a mixed solvent of two or more thereof. The non-aqueous solvent may contain a halogen-substituted product in which at least a part of hydrogen in a solvent described above is substituted with a halogen atom such as fluorine. Examples of the electrolyte salt include lithium salts such as LiPF₆. Note that the non-aqueous electrolyte is not limited to the liquid electrolyte, and may be a solid electrolyte using a gel polymer or the like.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side portion of the case body 16 protrudes inward to support the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at the respective central portions, and the insulating member 25 is interposed between the respective peripheral portions. When the internal pressure of the non-aqueous electrolyte secondary battery 10 increases due to heat generation due to an internal short circuit or the like, for example, the lower vent member 24 is deformed to push up the upper vent member 26 toward the cap 27 side and breaks, and a current path between the lower vent member 24 and the upper vent member 26 is cut off. When the internal pressure further increases, the upper vent member 26 breaks, and the gas is discharged from the opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 serves as a negative electrode terminal.

Hereinafter, the positive electrode 11, the negative electrode 12, and the separator 13 will be described in detail.

### <Positive Electrode>

The positive electrode 11 includes a positive electrode current collector and a positive electrode mixture layer disposed on the positive electrode current collector. As the positive electrode current collector, a foil of a metal, such as aluminum, that is stable in a potential range of the positive electrode, a film in which the metal is disposed on its surface layer, or the like can be used. A thickness of the positive electrode current collector is preferably, for example, in a range of greater than or equal to 1 µm and less than or equal to 20 µm.

It is preferable that the positive electrode mixture layer contains a positive electrode active material and further contains a binding agent, a conductive agent, or the like. A thickness of the positive electrode mixture layer is preferably, for example, in a range of greater than or equal to 10 µm and less than or equal to 300 µm.

The positive electrode 11 is obtained by, for example, applying a slurry for a positive electrode mixture layer containing a positive electrode active material, a binding agent, a conductive agent, and the like onto a positive electrode current collector, drying the positive electrode current collector to form a positive electrode mixture layer on the positive electrode current collector, and rolling the positive electrode mixture layer.

The positive electrode active material includes a composite oxide having a crystal structure belonging to a space group Fm-3m.

The crystal structure belonging to the space group Fm-3m means having a peak attributable to the space group Fm-3m in a diffraction pattern obtained by X-ray diffraction (XRD) measurement. Note that "-3" in the space group "Fm-3m" represents a target element of a 3-fold rotation-inversion axis, and should be originally indicated by adding "3" with an upper bar "-". The X-ray diffraction pattern of the composite oxide can be performed by powder X-ray diffraction measurement using an X-ray diffractometer ("MiniFlexII" manufactured by Rigaku Corporation) with a radiation source of CuKα rays, a tube voltage of 40 kV, and a tube current of 15 mA. In this case, the diffracted X-ray passes through a Kβ filter having a thickness of 30 µm and is detected by a high-speed one-dimensional detector (D/teX Ultra 2). In addition, a sampling width is 0.02°, a scan speed is 10°/min, a divergence slit width is 0.625°, a light receiving slit width is 13 mm (OPEN), and a scattering slit width is 8 mm. Then, the crystal structure of the composite oxide can be identified by Rietveld analysis using a "RIETAN-FP" program (F. Izumi and K. Momma, Solid State Phenom., 130, 15-20 (2007)) based on the obtained X-ray diffraction pattern. Note that the X-ray diffractometer is not limited to the above apparatus, and the X-ray source is also not limited. The X-ray diffraction measurement conditions are not limited to the above conditions. In addition, a method for analyzing the obtained X-ray diffraction pattern is not limited to the above method.

The composite oxide having a crystal structure belonging to the space group Fm-3m is represented by a general formula: LiₓTMₜₘM_{y}C_{2-f}F_{f}, and in the general formula, TM represents a transition metal, M represents a non-transition metal, and when Q = 2 × tm × {1 - (1 - f /2)⁵}, Q ≥ 1 is satisfied. Here, Q represents the number of oxygen bonded to the transition metal bonded to fluorine. In addition, one or more peaks in an SOC range of greater than or equal to 40% and less than or equal to 70% appear in a dV/dq-SOC curve showing a relationship between a state of charge SOC of a half-cell and dV/dq, which is a ratio of a change amount dV of a voltage V of the half-cell to a change amount dq of a battery capacity q of the half-cell, the dV/dq-SOC curve being obtained by charging the half-cell obtained by using the composite oxide as a positive electrode active material with a charging current of 0.1 C at 25°C to an end voltage in a range of greater than or equal to 4.7 V and less than or equal to 4.95 V A high discharge voltage can be obtained by using such a composite oxide. Manufacture conditions of the half-cell using the composite oxide as a positive electrode active material will be described in Examples.

In the dV/dq-SOC curve of the half-cell using the composite oxide as a positive electrode active material, the number of peaks is not limited as long as one or more peaks present in an SOC range of greater than or equal to 40% and less than or equal to 70% appear. In addition, the number of peaks may be only one. In addition, it is preferable that there is no peak in a range of less than 40% SOC.

### (dV/dq-SOC Curve)

When the charging of the half-cell is started under the above conditions, a battery voltage V and a current value I of the half-cell are measured every predetermined time, and the SOC (state of charge) is calculated based on the battery voltage V In addition, from the measured values of the battery voltage V and the current value I at this time, a change amount dq of the battery capacity (charge capacity) q of the half-cell and a change amount dV of the battery voltage V are calculated, and dV/dq is calculated based on these calculation results. When the SOC and dV/dq of the half-cell are calculated every predetermined time, a dV/dq-SOC curve showing a relationship between the SOC and dV/dq can be obtained based on these calculation results. Specifically, the dV/dQ-SOC curve can be obtained by graphing these values calculated every predetermined time with the horizontal axis representing the SOC value and the vertical axis representing the dV/dq value.

Whether or not one or more peaks in the SOC range of greater than or equal to 40% and less than or equal to 70% appear in the dV/dq-SOC curve depends on the composition of the composite oxide. In order to have one or more peaks in the SOC range of greater than or equal to 40% and less than or equal to 70% in the dV/dq-SOC curve, for example, it is preferable to control tm and f in the general formula in a range of Q ≥ 1. Furthermore, in the general formula, x, tm, y, and f preferably satisfy 1.75 ≤ x + tm + y ≤ 2 and 0 < f ≤ 0.7, and also preferably satisfy 1.0 < x ≤ 1.4, 0.4 ≤ tm < 1.0, 0 ≤ y ≤ 0.2, and 0.25 ≤ f ≤ 0.6. Note that the crystal structure may have vacancies in which Li atoms, TM atoms, and M atoms are not disposed. Here, having vacancies means that vacancies not filled with Li atoms, TM atoms, and M atoms are present in the composite oxide in the positive electrode active material taken out immediately after manufacture or by disassembling the secondary battery in a discharged state. A molar ratio of the vacancies is preferably greater than or equal to 0.05 and less than or equal to 0.25.

In the half-cell using the composite oxide of the present embodiment, a discharge capacity of the half-cell is greater than or equal to 100 mAh/g measured when the half-cell is subjected to constant current charge to a range of an end voltage of greater than or equal to 4.7 V and less than or equal to 4.95 V with a charging current of 0.1 C at 25°C, subjected to constant voltage charge to a current value of 0.05 C at the end voltage, and then discharged to an end voltage of greater than or equal to 3.0 V and less than or equal to 3.5 V with a discharging current of 0.1 C. Note that the discharge capacity is a capacity per unit mass of the positive electrode active material.

In addition, in the half-cell using the composite oxide of the present embodiment, a discharge capacity of the half-cell is greater than or equal to 200 mAh/g measured when the half-cell is subjected to constant current charge to a range of an end voltage of greater than or equal to 4.7 V and less than or equal to 4.95 V with a charging current of 0.1 C at 25°C, subjected to constant voltage charge to a current value of 0.05 C at the end voltage, and then discharged to an end voltage of greater than or equal to 2.5 V and less than or equal to 3.0 V with a discharging current of 0.1 C.

The composite oxide preferably contains Mn as the transition metal (TM) in that, for example, a high discharge voltage can be obtained, and in the general formula, a molar ratio tm_Mn of Mn in tm is preferably 0.6 < tm_Mn < 0.8.

The composite oxide preferably contains, for example, Mn and a transition metal other than Mn from the viewpoint of obtaining a high discharge voltage. Examples of the transition metal other than Mn include Ni, Co, Fe, Ti, Y, Zr, Nb, Mo, Sc, W, V, Gd, Ce, Ta, and Ag.

Examples of the non-transition metal (M) contained in the composite oxide include Al, Mg, Sb, Bi, Ca, Sr, Mg, K, Ga, Sn, and Zn.

Confirmation of the composition of the composite oxide can be performed by, for example, Rietveld analysis on parameters obtained by inductively coupled plasma emission spectrometry, X-ray photoelectron spectroscopy, and powder X-ray diffraction.

A method for producing the composite oxide is not particularly limited, and may be a known method in synthesis of a positive electrode active material, and the composite oxide can be obtained by, for example, treating a lithium source, an additive element source, a fluorine source, or the like by a mechanochemical method. The mechanochemical method (also referred to as a mechanochemical treatment or the like) refers to a synthesis method using a mechanochemical reaction. The mechanochemical reaction refers to a chemical reaction such as a crystallization reaction, a solid solution reaction, or a phase transition reaction using high energy locally generated by mechanical energy such as friction or compression in a process of crushing a solid substance. Examples of an apparatus for performing the mechanochemical method include a pulverizer and a disperser such as a ball mill, a bead mill, a vibration mill, a turbo mill, a mechano-fusion, or a disk mill. Among them, a ball mill is preferable. The mechanochemical treatment may be performed in an inert gas atmosphere such as argon gas, or may be performed in an oxygen-containing atmosphere or the like.

Examples of the lithium source include lithium carbonate and lithium hydroxide. The additive element source is a transition metal-containing compound and a non-transition metal-containing compound, and is, for example, a transition metal-containing oxide or hydroxide, a non-transition metal-containing oxide or hydroxide, a transition metal- or non-transition metal-containing composite oxide or hydroxide, and the like. The fluorine source is a fluoride such as lithium fluoride, molybdenum fluoride, or magnesium fluoride. Note that lithium fluoride may be used as a lithium source, a transition metal fluoride such as molybdenum fluoride may be used as a transition metal-containing compound as an additive element source, and a non-transition metal fluoride such as magnesium fluoride may be used as a non-transition metal-containing compound as an additive element source.

The composite oxide obtained by the mechanochemical treatment may be subjected to a heat treatment. A heating temperature is not particularly limited, and may be, for example, in a range of greater than or equal to 500°C and less than or equal to 1,000°C. In addition, a heating time is not particularly limited, and is, for example, greater than or equal to 1 hour and less than or equal to 20 hours. The heating may be performed in an inert gas atmosphere such as argon gas, or may be performed in an oxygen-containing atmosphere or the like.

The positive electrode active material may be composed of only the composite oxide, but may contain an active material other than the composite oxide. Examples of the other active material include a composite oxide represented by LiₓMO_{y} (M represents at least one kind of transition metal) (LiₓCoO₂, LiₓNiO₂, LiₓMnO₂, LiₓNi_{α}Co_{(1-α)}O₂, LiₓNi_{α}Mn_{β}Co_{(1-α-β)}O₂, or the like having a layered α-NaFeO₂-type crystal structure, or LiₓMn₂O₄, LiₓNi_{α}Mn_{(2-α)}O₄, or the like having a spinel-type crystal structure), and a polyanion compound represented by Li_{w}M'ₓ(XO_{y})_{z} (M' represents at least one kind of transition metal, and X represents, for example, P, Si, B, V, or the like) (LiFePO₄, LiMnPO₄, LiNiPO₄, LiCoPO₄, Li₃V₂(PO₄)₃, Li₂MnSiO₄, Li₂CoPO₄F, or the like).

A content of the composite oxide that has a crystal structure belonging to a space group Fm-3m and is represented by a general formula: LiₓTMₜₘM_{y}O_{2-f}F_{f}, in which in the general formula, TM represents a transition metal, M represents a non-transition metal, when Q = 2 × tm × {1 - (1 - f /2)⁵}, Q ≥ 1 is satisfied, and one or more peaks in an SOC range of greater than or equal to 40% and less than or equal to 70% appear in the dV/dq-SOC curve, is preferably greater than or equal to 50 mass%, more preferably greater than or equal to 70 mass%, and still more preferably greater than or equal to 90 mass%, with respect to a total mass of the positive electrode active material.

Examples of the conductive agent contained in the positive electrode mixture layer include carbon powders such as carbon black, acetylene black, Ketjenblack, and graphite. These conductive agents may be used alone or in combination of two or more thereof.

As the binding agent contained in the positive electrode mixture layer, for example, a fluorine-based resin such as polytetrafluoroethylene (PTFE) or polyvinylidene fluoride (PVdF), PAN, a polyimide-based resin, an acrylic resin, a polyolefin-based resin, styrenebutadiene rubber (SBR), CMC or a salt thereof, a polyacrylic acid (PAA) or a salt thereof (PAA-Na, PAA-K, or the like), polyvinyl alcohol (PVA), and the like can be used. These negative electrode active materials may be used alone or in combination of two or more thereof.

### <Negative Electrode>

The negative electrode 12 includes, for example, a negative electrode current collector such as a metal foil and a negative electrode mixture layer formed on the negative electrode current collector. The negative electrode current collector may be, for example, a foil of a metal, such as copper, that is stable in a potential range of the negative electrode, a film in which the metal is disposed on its surface layer. The negative electrode mixture layer contains, for example, a negative electrode active material, a binding agent, and the like.

The negative electrode active material contained in the negative electrode mixture layer is not particularly limited as long as it is a material capable of occluding and releasing lithium ions, and examples thereof include a carbon material, and an element capable of forming an alloy with lithium or a compound containing the element. As the carbon material, graphites such as natural graphite, non-graphitizable carbon, and artificial graphite, cokes, and the like can be used. Examples of the element capable of forming an alloy with lithium and the compound containing the element include silicon and tin, and silicon oxide and tin oxide formed by combining silicon and tin with oxygen. In addition to the above, a material having a higher charge-discharge potential with respect to metal lithium such as lithium titanate than a carbon material or the like can also be used. The binding agent contained in the negative electrode mixture layer may be the same as that in the positive electrode.

### <Separator>

As the separator 13, for example, a porous sheet having ion permeability and insulating properties is used. Specific examples of the porous sheet include a microporous thin film, a woven fabric, and a nonwoven fabric. As a material of the separator 13, olefin-based resins such as polyethylene and polypropylene, cellulose, and the like are preferable. The separator 13 may be a laminate including a cellulose fiber layer and a thermoplastic resin fiber layer formed of an olefin-based resin or the like, and the separator 13 may have a surface coated with an aramid resin or the like.

### EXAMPLES

Hereinafter, the present disclosure will be further described with reference to Examples, but the present disclosure is not limited to these Examples.

### <Example 1>

### [Preparation of Positive Electrode Active Material]

Lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed and mixed so that a molar ratio of Li:Mn:Ga:Nb:Ce:F was 1.126:0.695:0.048:0.038:0.005:0.431. The mixed powder was charged into a planetary ball mill (Premium-Line P7 manufactured by Fritsch GmbH, rotation speed: 600 rpm, container: 45 mL pot formed of zirconia, ball: ϕ3 mm ball formed of zirconia) and treated in an Ar-atmosphere at room temperature for 35 hours (after 1 hour of the operation, a cycle of pausing for 10 minutes was repeated 35 times). In this way, a composite oxide represented by Li_{1.126}Mn_{0.695}Ga_{0.048}Nb_{0.038}Ce_{0.005}O_{1.569}F_{0.431} was obtained.

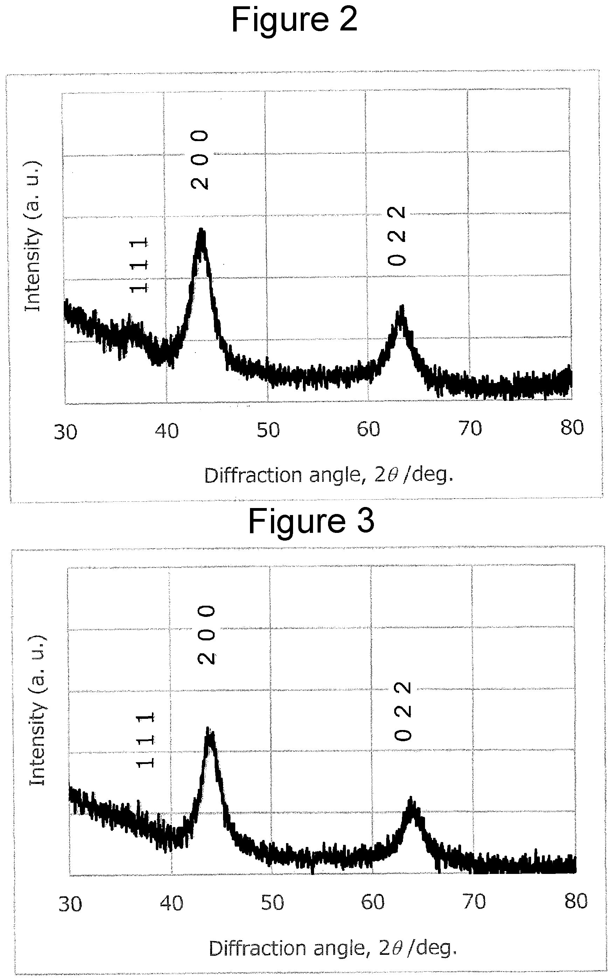

The obtained composite oxide was subjected to powder X-ray diffraction measurement, and the results are illustrated in FIG. 2. As a result of analyzing the crystal structure, it was confirmed that the crystal structure of the composite oxide belonged to a space group Fm-3m. The conditions of the powder X-ray diffraction measurement are as described above (the same conditions are applied to other Examples and Comparative Examples).

The obtained composite oxide was used as a positive electrode active material, and a half-cell was manufactured by the following method.

### [Manufacture of Positive Electrode]

70 parts by mass of the composite oxide, 20 parts by mass of acetylene black, and 10 parts by mass of polyvinylidene fluoride were mixed in terms of proportion, and N-methyl-2-pyrrolidone (NMP) was used as a dispersion medium to prepare a slurry for a positive electrode mixture layer. Next, the slurry for a positive electrode mixture layer was applied to an aluminum foil having a thickness of 15 µm and dried, and then rolled so that a film thickness is in a range of greater than or equal to 20 µm and less than or equal to 50 µm. Thereafter, punching was performed into a size of 20 mm × 20 mm to obtain a positive electrode in which a positive electrode mixture layer was formed on both surfaces of the aluminum foil.

### [Preparation of Non-Aqueous Electrolyte]

Lithium hexafluorophosphate (LiPF₆) was dissolved in a mixed solvent obtained by mixing fluoroethylene carbonate (FEC) and methyl propionate (FMP) at a volume ratio of 1:3 so that a concentration thereof was 1 mol/liter to prepare a non-aqueous electrolyte.

### [Manufacture of Test Cell]

Electrode leads were attached to the metal lithium foil (thickness: 0.3 mm) as the positive electrode and the negative electrode, respectively. Then, an electrode assembly with a separator interposed between the positive electrode and the negative electrode was produced, the electrode assembly was housed in an outer body of an aluminum laminate film, the non-aqueous electrolyte was injected, and the outer body was sealed. This was used as a half-cell (non-aqueous electrolyte secondary battery) of Comparative Example 1.

### <Example 2>

A composite oxide represented by Li_{1.139}Mn_{0.678}Mg_{0.024}Gd_{0.025}Nb_{0.048}O_{1.564}F_{0.436} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gadolinium oxide (Gd₂O₃), and niobium oxide (Nb₂O₅) were used as starting sources of a composite oxide, and the compounds were weighed so that a molar ratio of Li:Mn:Mg:Gd:Nb:F was 1.139:0.678:0.024:0.025:0.048:0.436. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.139}Mn_{0.678}Mg_{0.024}Gd_{0.025}Nb_{0.048}O_{1.564}F_{0.436}.

### <Example 3>

A composite oxide represented by Li_{1.2}Mn_{0.58}Ga_{0.05}Nb_{0.01}Ce_{0.01}O_{1.4}F_{0.6} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.2:0.58:0.05:0.01:0.01:0.6. The obtained composite oxide was subjected to powder X-ray diffraction measurement, and the results are illustrated in FIG. 3. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.2}Mn_{0.58}Ga_{0.05}Nb_{0.01}Ce_{0.01}O_{1.4}F_{0.6}.

### <Example 4>

A composite oxide represented by Li_{1.217}Mn_{0.696}Mg_{0.015}Nb_{0.01}Ce_{0.005}O_{1.404}F_{0.596} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), niobium oxide (Nb₂O₅), and cerium oxide (CeO₂) were used as starting sources of a composite oxide, and the compounds were weighed so that a molar ratio of Li:Mn:Mg:Nb:Ce:F was 1.217:0.696:0.015:0.01:0.005:0.596. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.217}Mn_{0.696}Mg_{0.015}Nb_{0.01}Ce_{0.005}O_{1.404}F_{0.596}.

### <Example 5>

A composite oxide represented by L_{1.15}Mn_{0.745}Mg_{0.025}Ga_{0.025}Ce_{0.005}O_{1.6}F_{0.4} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gallium oxide (Ga₂O₃), and cerium oxide (CeO₂) were used as starting sources of a composite oxide, and the compounds were weighed so that a molar ratio of Li:Mn:Mg:Ga:Ce:F was 1.15:0.745:0.025:0.025:0.005:0.4. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.15}Mn_{0.745}Mg_{0.025}Ga_{0.025}Ce_{0.005}O_{1.6}F_{0.4}.

### <Example 6>

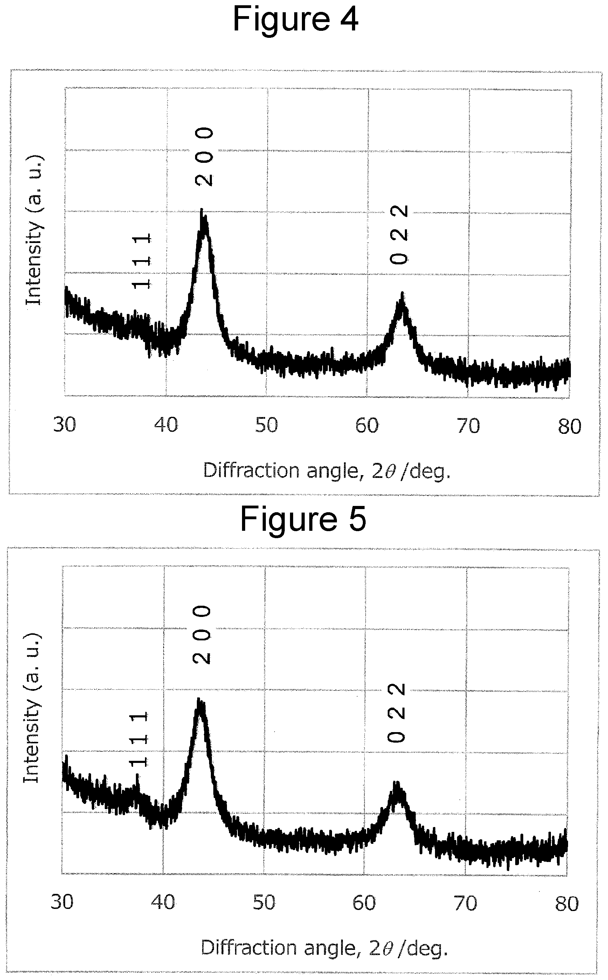

A composite oxide represented by Li_{1.225}Mn_{0.705}Mg_{0.005}Gd_{0.01}Ce_{0.005}O_{1.4}F_{0.6} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gadolinium oxide (Gd₂O₃), and cerium oxide (CeO₂) were used as starting sources of a composite oxide, and the compounds were weighed so that a molar ratio of Li:Mn:Mg:Gd:Ce:F was 1.225:0.705:0.005:0.01:0.005:0.6. The obtained composite oxide was subjected to powder X-ray diffraction measurement, and the results are illustrated in FIG. 4. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.225}Mn_{0.705}Mg_{0.005}Gd_{0.01}Ce_{0.005}O_{1.4}F_{0.6}.

### <Example 7>

A composite oxide represented by Li_{1.225}Mn_{0.7}Mg_{0.01}Ga_{0.01}Nb_{0.005}O_{1.4}F_{0.6} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gallium oxide (Ga₂O₃), and niobium oxide (Nb₂O₅) were used as starting sources of a composite oxide, and the compounds were weighed so that a molar ratio of Li:Mn:Mg:Ga:Nb:F was 1.225:0.7:0.01:0.01:0.005:0.6. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.225}Mn_{0.7}Mg_{0.01}Ga_{0.01}Nb_{0.005}O_{1.4}F_{0.6}.

### <Example 8>

A composite oxide represented by Li_{1.143}Mn_{0.765}Mg_{0.02}Nb_{0.01}Ce_{0.005}O_{1.553}F_{0.447} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), niobium oxide (Nb₂O₅), and cerium oxide (CeO₂) were used as starting sources of a composite oxide, and the compounds were weighed so that a molar ratio of Li:Mn:Mg:Nb:Ce:F was 1.143:0.765:0.02:0.01:0.005:0.447. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.143}Mn_{0.765}Mg_{0.02}Nb_{0.01}Ce_{0.005}O_{1.553}F_{0.447}.

### <Example 9>

A composite oxide represented by Li_{1.168}Mn_{0.755}Gd_{0.005}Nb_{0.01}Ce_{0.005}O_{1.553}F_{0.447} was obtained in the same operation as that of Example 1, except that lithium fluoride (LiF), lithium manganate (LiMnO₂), manganese(III) oxide (Mn₂O₃), lithium peroxide (Li₂O₂), gadolinium oxide (Gd₂O₃), niobium oxide (Nb₂O₅), and cerium oxide (CeO₂) were used as starting sources of a composite oxide, and the compounds were weighed so that a molar ratio of Li:Mn:Gd:Nb:Ce:F was 1.168:0.755:0.005:0.01:0.005:0.447. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.168}Mn_{0.755}Gd_{0.005}Nb_{0.01}Ce_{0.005}O_{1.553}F_{0.447}.

### <Example 10>

A composite oxide represented by Li_{1.175}Mn_{0.76}Ga_{0.005}Nb_{0.005}Ce_{0.005}O_{1.55}F_{0.45} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.175:0.76:0.005:0.005:0.005:0.45. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.175}Mn_{0.76}Ga_{0.005}Nb_{0.005}Ce_{0.005}O_{1.55}F_{0.45}.

### <Example 11>

A composite oxide represented by Li_{1.2}Mn_{0.685}Ga_{0.005}Nb_{0.005}Ce_{0.005}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.2:0.685:0.005:0.005:0.005:0.5. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.2}Mn_{0.685}Ga_{0.005}Nb_{0.005}Ce_{0.005}O_{1.5}F_{0.5}.

### <Example 12>

A composite oxide represented by Li_{1.175}Mn_{0.7}Mg_{0.025}Ga_{0.025}Ce_{0.025}O_{1.55}F_{0.45} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gallium oxide (Ga₂O₃), and cerium oxide (CeO₂) were used as starting sources of a composite oxide, and the compounds were weighed so that a molar ratio of Li:Mn:Mg:Ga:Ce:F was 1.175:0.7:0.025:0.025:0.025:0.45. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.175}Mn_{0.7}Mg_{0.025}Ga_{0.025}Ce_{0.025}O_{1.55}F_{0.45}.

### <Example 13>

A composite oxide represented by Li_{1.143}Mn_{0.775}Mg_{0.01}Gd_{0.005}Nb_{0.01}O_{1.553}F_{0.447} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gadolinium oxide (Gd₂O₃), and niobium oxide (Nb₂O₅) were used as starting sources of a composite oxide, and the compounds were weighed so that a molar ratio of Li:Mn:Mg:Gd:Nb:F was 1.143:0.775:0.01:0.005:0.01:0.447. The obtained composite oxide was subjected to powder X-ray diffraction measurement, and the results are illustrated in FIG. 5. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.143}Mn_{0.775}Mg_{0.01}Gd_{0.005}Nb_{0.01}O_{1.553}F_{0.447}.

### <Example 14>

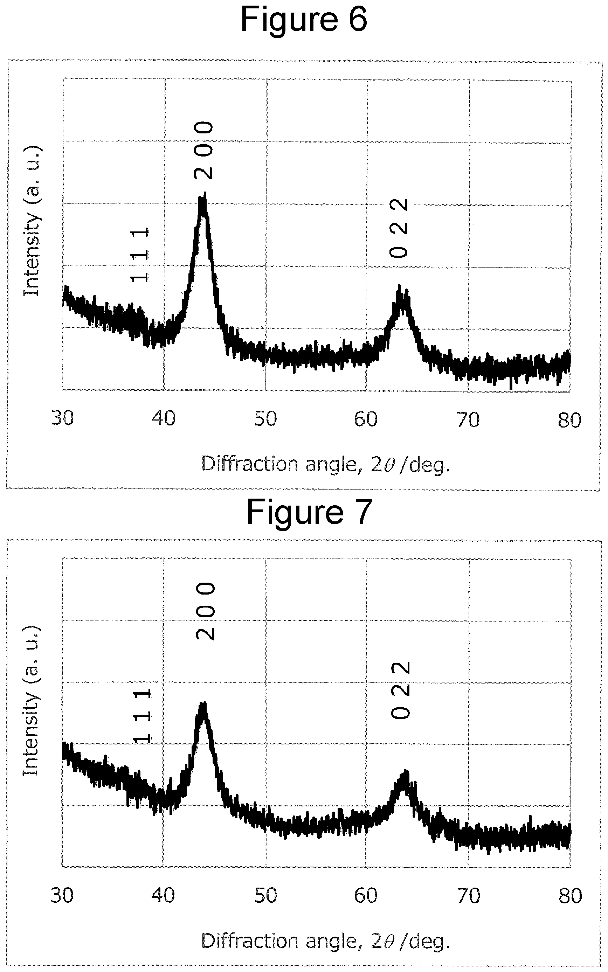

A composite oxide represented by Li_{1.213}Mn_{0.703}Ga_{0.01}Nb_{0.01}Ce_{0.005}O_{1.455}F_{0.545} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.213:0.703:0.01:0.01:0.005:0.545. The obtained composite oxide was subjected to powder X-ray diffraction measurement, and the results are illustrated in FIG. 6. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.213}Mn_{0.703}Ga_{0.01}Nb_{0.01}Ce_{0.005}O_{1.455}F_{0.545}.

### <Example 15>

A composite oxide represented by Li_{1.075}Mn_{0.7}K_{0.025}O_{1.3}F_{0.7} was obtained in the same operation as that of Example 1, except that lithium fluoride (LiF), lithium manganate (LiMnO₂), manganese(III) oxide (Mn₂O₃), lithium peroxide (Li₂O₂), and potassium superoxide (KO₂) were used as starting sources of a composite oxide, and the compounds were weighed so that a molar ratio of Li:Mn:K:F was 1.075:0.7:0.025:0.7. The obtained composite oxide was subjected to powder X-ray diffraction measurement, and the results are illustrated in FIG. 7. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.075}Mn_{0.7}K_{0.025}O_{1.3}F_{0.7}.

### <Example 16>

A composite oxide represented by Li_{1.15}Mn_{0.725}Ag_{0.025}O_{1.35}F_{0.65} was obtained in the same operation as that of Example 1, except that lithium fluoride (LiF), lithium manganate (LiMnO₂), manganese(III) oxide (Mn₂O₃), lithium peroxide (Li₂O₂), and silver oxide (Ag₂O) were used as starting sources of a composite oxide, and the compounds were weighed so that a molar ratio of Li:Mn:Ag:F was 1.15:0.725:0.025:0.65. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.15}Mn_{0.725}Ag_{0.025}O_{1.35}F_{0.65}.

### <Example 17>

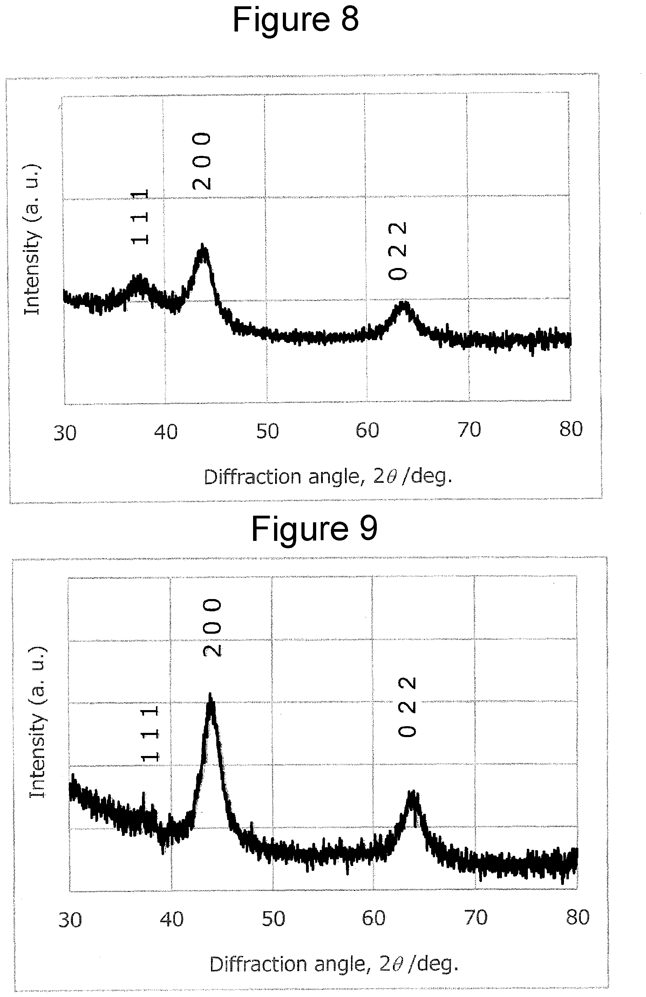

A composite oxide represented by Li_{1.1}Mn_{0.75}Ag_{0.1}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), and silver oxide (Ag₂O) were used as starting sources of a composite oxide, and the compounds were weighed so that a molar ratio of Li:Mn:Ag:F was 1.1:0.75:0.1:0.5. The obtained composite oxide was subjected to powder X-ray diffraction measurement, and the results are illustrated in FIG. 8. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.1}Mn_{0.75}Ag_{0.1}O_{1.5}F_{0.5}.

### <Comparative Example 1>

A composite oxide represented by Li_{1.192}Mn_{0.73}Mg_{0.005}Gd_{0.005}Nb_{0.01}O_{1.702}F_{0.298} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gadolinium oxide (Gd₂O₃), and niobium oxide (Nb₂O₅) were used as starting sources of a composite oxide, and the compounds were weighed so that a molar ratio of Li:Mn:Mg:Gd:Nb:F was 1.192:0.73:0.005:0.005:0.01:0.298. The obtained composite oxide was subjected to powder X-ray diffraction measurement, and the results are illustrated in FIG. 9. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.192}Mn_{0.73}Mg_{0.005}Gd_{0.005}Nb_{0.01}O_{1.702}F_{0.298}.

### <Comparative Example 2>

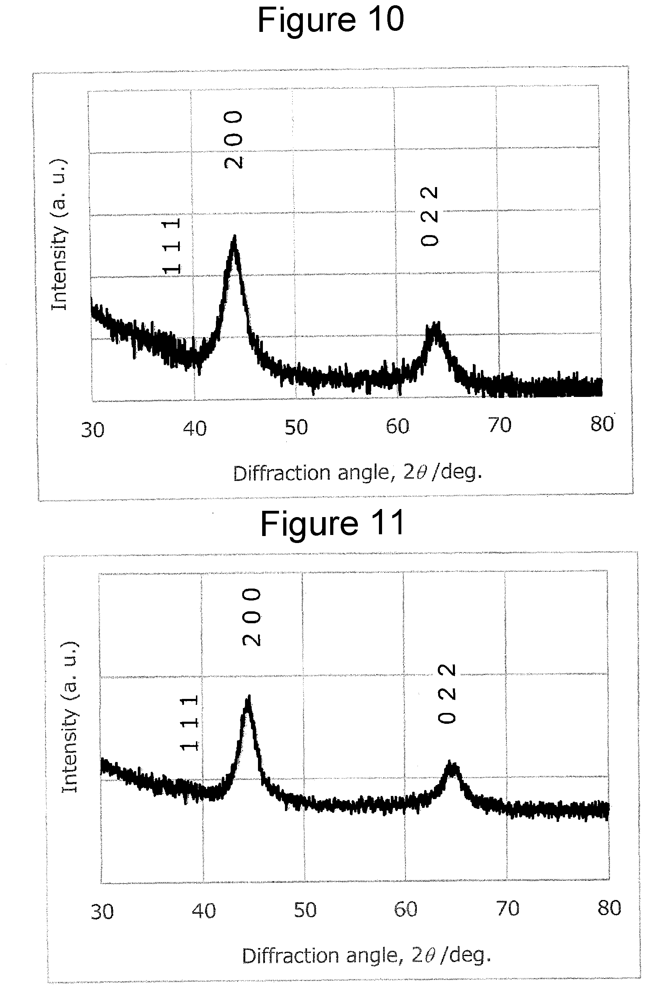

A composite oxide represented by Li_{1.225}Mn_{0.625}Mg_{0.025}Ce_{0.025}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), and cerium oxide (CeO₂) were used as starting sources of a composite oxide, and the compounds were weighed so that a molar ratio of Li:Mn:Mg:Ce:F was 1.225:0.625:0.025:0.025:0.5. The obtained composite oxide was subjected to powder X-ray diffraction measurement, and the results are illustrated in FIG. 10. As a result of analyzing the crystal structure, it was confirmed that the crystal structure of the composite oxide belonged to a space group Fm-3m.

Then, a half-cell was manufactured in the same manner as that of Example 1 using the composite oxide represented by Li_{1.225}Mn_{0.625}Mg_{0.025}Ce_{0.025}O_{1.5}F_{0.5}.

### <Comparative Example 3>

A composite oxide represented by Li_{1.25}Mn_{0.485}Ga_{0.005}Nb_{0.005}Ce_{0.005}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.25:0.485:0.005:0.005:0.005:0.5. The obtained composite oxide was subjected to powder X-ray diffraction measurement, and the results are illustrated in FIG. 11. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.25}Mn_{0.485}Ga_{0.005}Nb_{0.005}Ce_{0.005}O_{1.5}F_{0.5}.

### <Comparative Example 4>

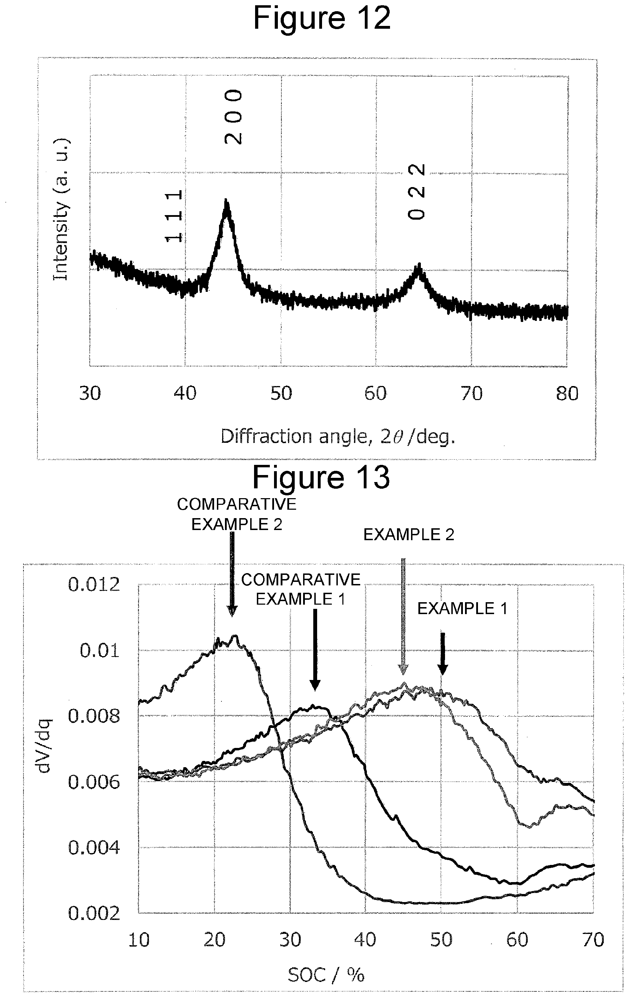

A composite oxide represented by Li_{1.25}Mn_{0.45}Mg_{0.025}Ce_{0.025}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), and cerium oxide (CeO₂) were used as starting sources of a composite oxide, and the compounds were weighed so that a molar ratio of Li:Mn:Mg:Ce:F was 1.25:0.45:0.025:0.025:0.5. The obtained composite oxide was subjected to powder X-ray diffraction measurement, and the results are illustrated in FIG. 12. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.25}Mn_{0.45}Mg_{0.025}Ce_{0.025}O_{1.5}F_{0.5}.

### [dV/dq-SOC Curve]

Each of the half-cells of the respective Examples and the respective Comparative Examples was subjected to constant current charge at a constant current of 0.1 C until an end voltage (battery voltage) reached 4.95 V under a temperature environment at 25°C. During the charging, the SOC and dV/dq of the half-cell were calculated every predetermined time to obtain a dV/dq-SOC curve. The results are illustrated in FIGS. 13 to 16.

As illustrated in FIG. 13, in the half-cells of Examples 1 and 2, one peak in an SOC range of greater than or equal to 40% and less than or equal to 70% appeared in the dV/dq-SOC curve. On the other hand, in the half-cells of Comparative Examples 1 and 2, one peak in an SOC range of greater than or equal to 10% and less than 40% appeared in the dV/dq-SOC curve.

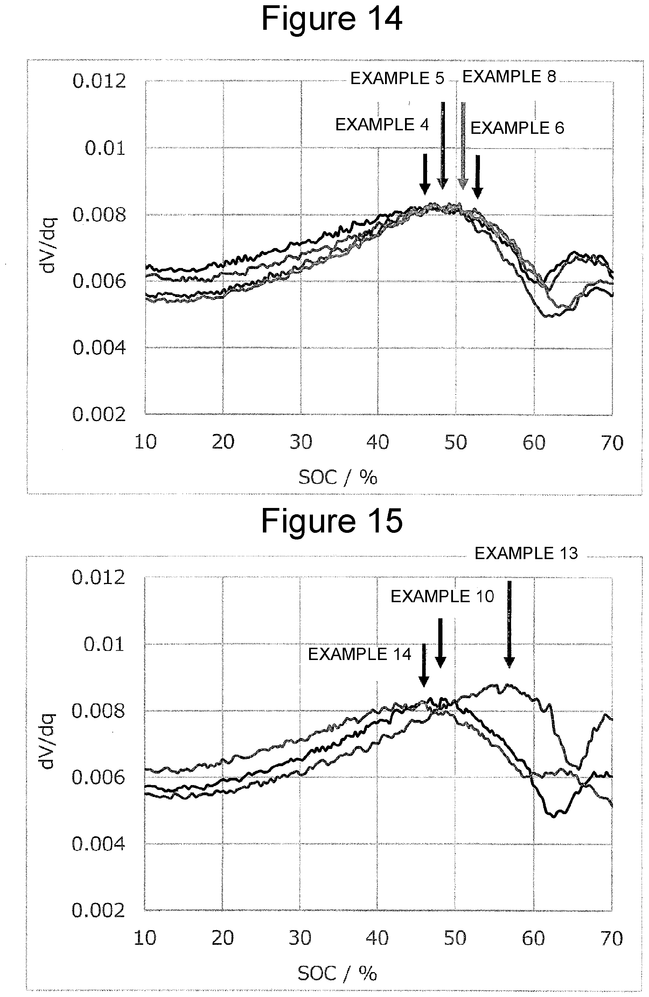

As illustrated in FIG. 14, in the half-cells of Examples 4, 5, 6, and 8, two peaks in an SOC range of greater than or equal to 40% and less than or equal to 70% appeared in the dV/dq-SOC curve.

As illustrated in FIG. 15, in the half-cells of Examples 10, 13, and 14, two peaks in an SOC range of greater than or equal to 40% and less than or equal to 70% appeared in the dV/dq-SOC curve.

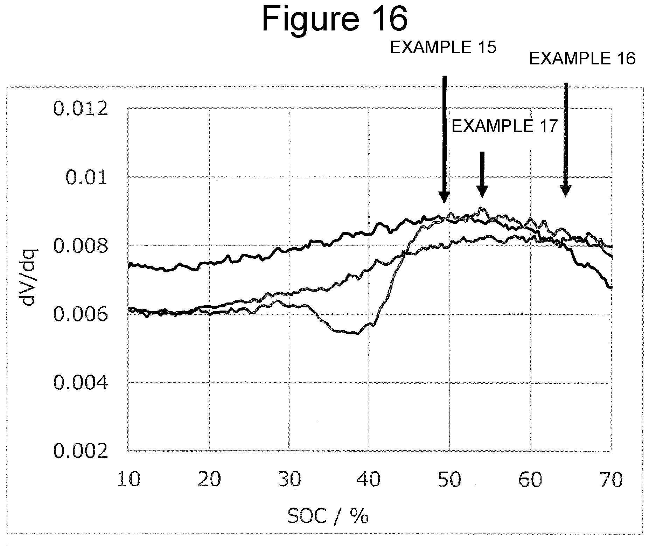

As illustrated in FIG. 16, in the half-cells of Examples 15, 16, and 17, one peak in an SOC range of greater than or equal to 40% and less than or equal to 70% appeared in the dV/dq-SOC curve.

Note that it was confirmed that, in the half-cells of Examples 3, 7, 9, 11, and 12, one or more peaks in an SOC range of greater than or equal to 40% and less than or equal to 70% appeared in the dV/dq-SOC curve. In addition, it was confirmed that, in the half-cells of Comparative Examples 3 and 4, one peak in an SOC range of greater than or equal to 10% and less than 40% appeared in the dV/dq-SOC curve.

### [Charge and Discharge Test 1]

Each of the half-cells of the respective Examples and the respective Comparative Examples was subjected to constant current charge at a constant current of 0.1 C under a temperature environment of 25°C until an end voltage (battery voltage) reached 4.95 V, and subjected to constant voltage charge at 4.95 V until a current value reached 0.05 C. Thereafter, the half-cell was subjected to constant current discharge at a constant current of 0.1 C until an end voltage (battery voltage) reached 2.5 V Then, a value obtained by dividing the total amount of power at the time of discharging by the total current was obtained as a discharge voltage.

In Table 1, the compositions of the composite oxides, the values of tm, f, and Q (= 2 × tm × {1 - (1 - f/2)⁵}) of the compositions (LiₓTMₜₘM_{y}O_{2-f}F_{f}: TM represents a transition metal and M represents a non-transition metal), and the results of the discharge voltage of the respective Examples and the respective Comparative Examples are summarized.

**[Table 1]**

| | Composite oxide LiₓTMₜₘM_{y}O_{2-f}F_{f} (TM: transition metal, M: non-transition metal) | | | | Test results |
|---|---|---|---|---|---|
| | Composition | Qm | tm | f | Discharge voltage (V) |
| Example 1 | Li_{1.126}Mn_{0.695}Ga_{0.048}Nb_{0.038}Ce_{0.005}O_{1.569}F_{0.431} | 1.04 | 0.738 | 0.431 | 3.540 |
| Example 2 | Li_{1.139}Mn_{0.678}Mg_{0.024}Gd_{0.025}Nb_{0.048}O_{1.564}F_{0.436} | 1.06 | 0.751 | 0.436 | 3.524 |
| Example 3 | Li_{1.2}Mn_{0.58}Ga_{0.05}Nb_{0.01}Ce_{0.01}O_{1.4}F_{0.6} | 1.00 | 0.6 | 0.6 | 3.516 |
| Example 4 | Li_{1.217}Mn_{0.696}Mg_{0.015}Nb_{0.01}Ce_{0.005}O_{1.404}F_{0.596} | 1.18 | 0.711 | 0.596 | 3.545 |
| Example 5 | Li_{1.15}Mn_{0.745}Mg_{0.025}Ga_{0.025}Ce_{0.005}O_{1.6}F_{0.4} | 1.01 | 0.75 | 0.4 | 3.533 |
| Example 6 | Li_{1.225}Mn_{0.705}Mg_{0.005}Gd_{0.01}Ce_{0.005}O_{1.4}F_{0.6} | 1.20 | 0.72 | 0.6 | 3.562 |
| Example 7 | Li_{1.225}Mn_{0.7}Mg_{0.01}Ga_{0.01}Nb_{0.005}O_{1.4}F_{0.6} | 1.17 | 0.705 | 0.6 | 3.548 |
| Example 8 | Li_{1.143}Mn_{0.765}Mg_{0.02}Nb_{0.01}Ce_{0.005}O_{1.553}F_{0.447} | 1.12 | 0.78 | 0.447 | 3.536 |
| Example 9 | Li_{1.168}Mn_{0.755}Gd_{0.005}Nb_{0.01}Ce_{0.005}O_{1.553}F_{0.447} | 1.11 | 0.775 | 0.447 | 3.540 |
| Example 10 | Li_{1.175}Mn_{0.76}Ga_{0.005}Nb_{0.005}Ce_{0.005}O_{1.55}F_{0.45} | 1.11 | 0.77 | 0.45 | 3.539 |
| Example 11 | Li_{1.2}Mn_{0.685}Ga_{0.005}Nb_{0.005}Ce_{0.005}O_{1.5}F_{0.5} | 1.06 | 0.695 | 0.5 | 3.537 |
| Example 12 | Li_{1.175}Mn_{0.7}Mg_{0.025}Ga_{0.025}Ce_{0.025}O_{1.55}F_{0.45} | 1.04 | 0.725 | 0.45 | 3.517 |
| Example 13 | Li_{1.143}Mn_{0.775}Mg_{0.01}Gd_{0.005}Nb_{0.01}O_{1.553}F_{0.447} | 1.13 | 0.79 | 0.447 | 3.550 |
| Example 14 | Li_{1.213}Mn_{0.703}Ga_{0.01}Nb_{0.01}Ce_{0.005}O_{1.455}F_{0.545} | 1.14 | 0.718 | 0.545 | 3.551 |
| Example 15 | Li_{1.075}Mn_{0.7}K_{0.025}O_{1.3}F_{0.7} | 1.24 | 0.7 | 0.7 | 3.595 |
| Example 16 | Li_{1.15}Mn_{0.725}Ag_{0.025}O_{1.35}F_{0.65} | 1.29 | 0.75 | 0.65 | 3.594 |
| Example 17 | Li_{1.1}Mn_{0.75}Ag_{0.1}O_{1.5}F_{0.5} | 1.30 | 0.85 | 0.5 | 3.533 |
| Comparative Example 1 | Li_{1.192}Mn_{0.73}Mg_{0.005}Gd_{0.005}Nb_{0.01}O_{1.702}F_{0.298} | 0.82 | 0.745 | 0.298 | 3.467 |
| Comparative Example 2 | Li_{1.225}Mn_{0.625}Mg_{0.025}Ce_{0.025}O_{1.5}F_{0.5} | 0.99 | 0.65 | 0.5 | 3.431 |
| Comparative Example 3 | Li_{1.25}Mn_{0.485}Ga_{0.005}Nb_{0.005}Ce_{0.005}O_{1.5}F_{0.5} | 0.76 | 0.495 | 0.5 | 3.287 |
| Comparative Example 4 | Li_{1.25}Mn_{0.45}Mg_{0.025}Ce_{0.025}O_{1.5}F_{0.5} | 0.72 | 0.475 | 0.5 | 3.205 |

In all of Examples 1 to 17, a higher discharge voltage was exhibited compared to Comparative Examples 1 to 4. From these results, it can be said that a high discharge voltage can be obtained by using a composite oxide that has a crystal structure belonging to a space group Fm-3m and is represented by a general formula: LiₓTMₜₘM_{y}O_{2-f}F_{f}, in which in the general formula, TM represents a transition metal, M represents a non-transition metal, when Q = 2 × tm × {1 - (1 - f /2)⁵}, Q ≥ 1 is satisfied, and one or more peaks in an SOC range of greater than or equal to 40% and less than or equal to 70% appear in a dV/dq-SOC curve showing a relationship between dV/dq and SOC of the half-cell.

### <Example 18>

The half-cell of Example 1 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Example 19>

The half-cell of Example 2 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Example 20>

The half-cell of Example 7 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Example 21>

The half-cell of Example 9 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Example 22>

The half-cell of Example 11 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Example 23>

The half-cell of Example 16 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Comparative Example 5>

The half-cell of Comparative Example 2 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

### <Comparative Example 6>

The half-cell of Comparative Example 3 was subjected to constant current charge at a constant current of 0.1 C until an end voltage (battery voltage) reached 4.7 V under a temperature environment at 25°C. During the charging, the SOC and dV/dq of the half-cell were calculated every predetermined time to obtain a dV/dq-SOC curve.

As a result of confirming the dV/dq-SOC curves of Examples 18 to 23 and Comparative Examples 5 and 6, in the half-cells of Examples 18 to 23, one or more peaks in an SOC range of greater than or equal to 40% and less than or equal to 70% appeared in the dV/dq-SOC curve. On the other hand, in the half-cells of Comparative Examples 5 and 6, one or more peaks in an SOC range of greater than or equal to 10% and less than 40% appeared in the dV/dq-SOC curve.

### [Charge and Discharge Test 2]

Each of the half-cells of Examples 18 to 23 and Comparative Examples 5 and 6 was subjected to constant current charge at a constant current of 0.1 C until an end voltage (battery voltage) reached 4.7 V under a temperature environment at 25°C. Thereafter, the half-cell was subjected to constant current discharge at a constant current of 0.1 C until an end voltage (battery voltage) reached 3.0 V The discharge capacity D1 (mAh/g) at the time of performing the constant current discharge was determined.

### [Charge and Discharge Test 3]

Each of the half-cells of Examples 18 to 23 and Comparative Examples 5 and 6 was subjected to constant current charge at a constant current of 0.1 C until an end voltage (battery voltage) reached 4.7 V under a temperature environment at 25°C. Thereafter, the half-cell was subjected to constant current discharge at a constant current of 0.1 C until an end voltage (battery voltage) reached 2.5 V The discharge capacity D2 (mAh/g) at the time of performing the constant current discharge was determined.

### [Charge and Discharge Test 4]

Each of the half-cells of Examples 18 to 23 and Comparative Examples 5 and 6 was subjected to constant current charge at a constant current of 0.1 C until an end voltage (battery voltage) reached 4.7 V under a temperature environment at 25°C. Thereafter, the half-cell was subjected to constant current discharge at a constant current of 0.1 C until an end voltage (battery voltage) reached 1.5 V Then, a value obtained by dividing the total amount of power at the time of discharging by the total current was obtained as a discharge voltage V2.

In Table 2, the compositions of the composite oxides, the values of tm, f, and Q (= 2 × tm × {1 - (1 - f/2)⁵}) of the compositions (LiₓTMₜₘM_{y}O_{2-f}F_{f}: TM represents a transition metal and M represents a non-transition metal), and the results of the discharge capacity D1, the discharge capacity D2, and the discharge voltage V2 of Examples 18 to 23 and Comparative Examples 5 and 6 are summarized.

**[Table 2]**

| | Composite oxide LiₓTMₜₘM_{y}O_{2-f}F_{f} (TM: transition metal, M: non-transition metal) | | | | Test results | | |
|---|---|---|---|---|---|---|---|
| | Composition | Qm | tm | 1 | Discharge capacity D1 (mAh/g) | Discharge capacity D2 (mAh/g) | Discharge voltage V2 (V) |
| Example 18 | Li_{1.126}Mn_{0.695}Ga_{0.048}Nb_{0.038}Ce_{0.005}O_{1.569}F_{0.431} | 1.04 | 0.738 | 0.431 | 104.9 | 222.2 | 3.305 |
| Example 19 | Li_{1.139}Mn_{0.678}Mg_{0.024}Gd_{0.025}Nb_{0.048}O_{1.564}F_{0.436} | 1.06 | 0.751 | 0.436 | 104.5 | 231.5 | 3.289 |
| Example 20 | Li_{1.225}Mn_{0.7}Mg_{0.01}Ga_{0.01}Nb_{0.005}O_{1.4}F_{0.6} | 1.17 | 0.705 | 0.6 | 115.4 | 241.8 | 3.331 |
| Example 21 | Li_{1.168}Mn_{0.755}Gd_{0.005}Nb_{0.01}Ce_{0.005}O_{1.553}F_{0.447} | 1.11 | 0.775 | 0.447 | 110.8 | 231.8 | 3.337 |
| Example 22 | Li_{1.2}Mn_{0.685}Ga_{0.005}Nb_{0.005}Ce_{0.005}O_{1.5}F_{0.5} | 1.06 | 0.695 | 0.5 | 124.8 | 264.7 | 3.325 |
| Example 23 | Li_{1.15}Mn_{0.725}Ag_{0.025}O_{1.35}F_{0.65} | 1.29 | 0.75 | 0.65 | 108.8 | 214.3 | 3.349 |
| Comparative Example 5 | Li_{1.225}Mn_{0.625}Mg_{0.025}Ce_{0.025}O_{1.5}F_{0.5} | 0.99 | 0.65 | 0.5 | 126.2 | 210.7 | 3.172 |
| Comparative Example 6 | Li_{1.25}Mn_{0.485}Ga_{0.005}Nb_{0.005}Ce_{0.005}O_{1.5}F_{0.5} | 0.76 | 0.495 | 0.5 | 102.8 | 201.7 | 3.113 |

In all of Examples 18 to 23, a higher discharge voltage was exhibited compared to Comparative Examples 5 and 6. Further, in Examples 18 to 23, the discharge capacity D1 was greater than 100 mAh/g and the discharge capacity D2 was greater than 200 mAh/g, indicating not only a high discharge voltage but also a high discharge capacity. From these results, it can be said that a high discharge voltage can be obtained by using a composite oxide that has a crystal structure belonging to a space group Fm-3m and is represented by a general formula: LiₓTMₜₘM_{y}O_{2-f}F_{f}, in which in the general formula, TM represents a transition metal, M represents a non-transition metal, when Q = 2 × tm × {1 - (1 - f /2)⁵}, Q ≥ 1 is satisfied, and one or more peaks in an SOC range of greater than or equal to 40% and less than or equal to 70% appear in a dV/dq-SOC curve showing a relationship between dV/dq and SOC of the half-cell.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material for a non-aqueous electrolyte secondary battery, wherein the positive electrode active material is a composite oxide that has a crystal structure belonging to a space group Fm-3m and is represented by a general formula: LiₓTMₜₘM_{y}O_{2-f}F_{f},
in the general formula, TM represents a transition metal, M represents a non-transition metal, and when Q = 2 × tm × {1 - (1 - f/2)⁵}, Q ≥ 1 is satisfied, and
when the composite oxide is used for a half-cell manufactured by the following method, one or more peaks in an SOC range of greater than or equal to 40% and less than or equal to 70% appear in a dV/dq-SOC curve showing a relationship between a state of charge SOC of the half-cell and dV/dq, which is a ratio of a change amount dV of a voltage V of the half-cell to a change amount dq of a battery capacity q of the half-cell, the dV/dq-SOC curve being obtained by charging the half-cell with a charging current of 0.1 C at 25°C to an end voltage in a range of greater than or equal to 4.7 V and less than or equal to 4.95 V,
(Method: A slurry for a positive electrode mixture layer is prepared by mixing the composite oxide, acetylene black, and polyvinylidene fluoride at a mass ratio of 7:2:1, and the mixture is dispersed using N-methyl-2-pyrrolidone. The slurry for a positive electrode mixture layer is applied to an aluminum foil, dried, and then rolled so that a film thickness is in a range of greater than or equal to 20 µm and less than or equal to 50 µm. Thereafter, punching is performed into a size of 20 mm × 20 mm to obtain a positive electrode. An electrode assembly in which a separator is interposed between the positive electrode and a metal lithium foil (thickness: 0.3 mm) as a negative electrode is housed in an outer body of an aluminum laminate film, and a non-aqueous electrolyte in which LiPF₆ is dissolved in a mixed solvent of fluoroethylene carbonate and methyl propionate (volume ratio: 1:3) so that a concentration thereof is 1 mol/liter is injected into the outer body and sealed to form a half-cell).

2. The positive electrode active material for a non-aqueous electrolyte secondary battery according to claim 1, wherein a discharge capacity of the half-cell is greater than or equal to 100 mAh/g measured when the half-cell is subjected to constant current charge to a range of an end voltage of greater than or equal to 4.7 V and less than or equal to 4.95 V with a charging current of 0.1 C at 25°C, subjected to constant voltage charge to a current value of 0.05 C at the end voltage, and then discharged to an end voltage of greater than or equal to 3.0 V and less than or equal to 3.5 V with a discharging current of 0.1 C.

3. The positive electrode active material for a non-aqueous electrolyte secondary battery according to claim 1, wherein a discharge capacity of the half-cell is greater than or equal to 200 mAh/g measured when the half-cell is subjected to constant current charge to a range of an end voltage of greater than or equal to 4.7 V and less than or equal to 4.95 V with a charging current of 0.1 C at 25°C, subjected to constant voltage charge to a current value of 0.05 C at the end voltage, and then discharged to an end voltage of greater than or equal to 2.5 V and less than or equal to 3.0 V with a discharging current of 0.1 C.

4. The positive electrode active material for a non-aqueous electrolyte secondary battery according to any one of claims 1 to 3, wherein in the general formula, x, tm, y, and f satisfy 1.75 ≤ x + tm + y ≤ 2 and 0 < f ≤ 0.7.

5. The positive electrode active material for a non-aqueous electrolyte secondary battery according to any one of claims 1 to 4, wherein in the general formula, x, tm, y, and f satisfy 1.0 < x ≤ 1.4, 0.4 ≤ tm < 1.0, 0 ≤ y ≤ 0.2, and 0.25 ≤ f ≤ 0.6.

6. The positive electrode active material for a non-aqueous electrolyte secondary battery according to any one of claims 1 to 5, wherein the composite oxide contains Mn as the transition metal (TM), and in the general formula, a molar ratio tm_Mn of Mn in tm is 0.6 < tm_Mn < 0.8.

7. The positive electrode active material for a non-aqueous electrolyte secondary battery according to claim 6, wherein the composite oxide contains Mn and a transition metal other than Mn as the transition metal (TM).
